# EUROPÄISCHE PATENTSCHRIFT

(11) **EP 1 233 284 B1**
(45) Veröffentlichungstag und Bekanntmachung des Hinweises auf die Patenterteilung: **08.10.2003**
(21) Anmeldenummer: 01127974.2
(22) Anmeldetag: 24.11.2001
(51) Int. Cl.: G02B 1/10, G02B 5/08, G02B 5/22

(54) **Abdeckteil für eine Lichtquelle**
Cover for a light source
Pièce de recouvrement pour une source de lumière

(30) Priorität: 20.12.2000 DE 20021657 U
(43) Veröffentlichungstag der Anmeldung: 21.08.2002
(73) Patentinhaber: ALANOD Aluminium-Veredlung GmbH & Co. KG, 58256 Ennepetal (DE)
(72) Erfinder: Reichert, Werner, 42287 Wuppertal (DE); Gänz, Klaus, 42389 Wuppertal (DE)
(74) Vertreter: Patentanwälte Dr. Solf & Zapf

(56) Entgegenhaltungen:
- EP-A- 0 918 234
- EP-A- 0 992 738
- GB-A- 1 285 604
- US-A- 5 919 561

## Beschreibung

Die vorliegende Erfindung betrifft ein Abdeckteil für eine Lichtquelle, insbesondere für eine in einem Kraftfahrzeugscheinwerfer angeordnete Scheinwerferlampe, mit einer Wandung, die eine erste, der Lichtquelle zugekehrte, lichtabsorbierend wirkende Seite und eine zweite, vorzugsweise reflektierend wirkende, Seite aufweist.

Derartige Abdeckteile sind bekannt (siehe beispielsweise EP 0 992 738 A2). Sie sollen insbesondere in Kraftfahrzeugscheinwerfem einen Teil des Lichtes abdecken, der von einer in einem Reflektor des Scheinwerfers befestigten Lampe ausgeht. Die bekannten Abdeckteile weisen vielfach einen schirm- oder schildartigen Aufbau auf, um das von der Lichtquelle in Richtung auf eine durchsichtige, den Scheinwerfer insbesondere frontseitig verschließende Scheibe abgegebene Lichtbündel zumindest teilweise zurückzuhalten, so daß die Leuchtwirkung des Scheinwerfers in erster Linie durch das vom Reflektor zurückgeworfene Licht bestimmt wird. Die erste, lichtabsorbierend wirkende Seite des Abdeckteils ist dabei der Lichtquelle zugewandt, während die zweite Seite in Richtung auf die Scheibe weist. Die Abdeckteile sollen möglichst die zurückgehaltene Strahlung nicht wieder reflektieren, so daß sie zu diesem Zweck auf der der Lichtquelle zugewandten Seite oftmals eine konkave Krümmung aufweisen und dort, z.B. mit Hilfe von Lacken, geschwärzt sind, um eine starke lichtabsorbierende Wirkung zu erzielen. Die zweite Seite kann dann auf der der Scheibe des Scheinwerfers zugewandten Seite konvex ausgebildet sein und, um das Abdeckteil bei einer Frontaufsicht auf den Scheinwerfer nicht störend wirken zu lassen, auch mit einer reflektierend wirkenden Oberfläche versehen sein.

Bei den in Kraftfahrzeugscheinwerfern eingesetzten Lichtquellen handelt es sich zumeist um sehr leuchtstarke Lampen, wie Halogen- oder Xenonstrahler, für die auch eine starke Wärmeentwicklung charakteristisch ist. Dabei erhebt sich das Problem, daß es in einer vorhandenen Schwärzungsschicht zu Materialzersetzungen kommen kann, die beispielsweise zu einem Ausbleichen der Schicht und/oder zum Ausgasen von flüchtigen Bestandteilen führen können, welche sich wiederum auf insbesondere kälteren Scheinwerferteilen, wie dem Reflektor oder der Scheibe, aber auch auf der Lampe selbst, niederschlagen können. Dies zieht unerwünschterweise eine Leistungsminderung des Scheinwerfers oder auch eine verringerte Lebensdauer der Lichtquelle nach sich.

Der vorliegenden Erfindung liegt die Aufgabe zugrunde, ein Abdeckteil der eingangs beschriebenen Art zu schaffen, mit dem einerseits eine hohe Lichtabsorption erreicht wird und das andererseits bei möglichst aufwandsarmer Herstellungsweise eine unter insbesondere stark thermisch beanspruchenden Betriebsbedingungen verbesserte Einsatzcharakteristik und längere Lebensdauer aufweist.

Erfindungsgemäß wird dies dadurch erreicht, daß die Wandung aus einem Verbundmaterial mit einem metallischen Träger besteht, auf den auf der ersten Seite ein optisch wirksames, aus drei Schichten aufgebautes Mehrschichtsystem aufgebracht ist, dessen oberste Schicht eine dielektrische Schicht, vorzugsweise eine oxidische, fluoridische oder nitridische Schicht der chemischen Zusammensetzung MeO_{z}, MeFᵣ, MeNₛ, mit einem Brechungsindex n < 1,8 und dessen mittere Schicht eine lichtabsorbierende chromoxidische Schicht der chemischen Zusammensetzung CrOₓ ist und dessen unterste Schicht aus Gold, Silber, Kupfer, Chrom, Aluminium, Nickel und/oder Molybdän besteht, wobei die Indizes x, z, r und s ein stöchiometrisches oder nichtstöchiometrisches Verhältnis in den Oxiden, Fluoriden oder Nitriden bezeichnen.

Bei der obersten Schicht kann es sich bevorzugt um eine siliciumoxidische Schicht der chemischen Zusammensetzung SiO_{y} handeln, wobei der Index y wiederum ein stöchiometrisches oder nichtstöchiometrisches Verhältnis in der oxidischen Zusammensetzung bezeichnet.

Das erfindungsgemäß vorhandene optische Mehrschichtsystem ist zunächst in vorteilhafter Weise aufbringbar, indem auf umweltgefährende, zum Teil giftige, Salzlösungen bei der Herstellung verzichtet werden kann. So kann die metallische Schicht des optischen Mehrschichtsystems eine Sputterschicht oder eine durch Verdampfen, insbesondere durch Elektronenbombardement oder aus thermischen Quellen, erzeugte Schicht sein. Die beiden oberen Schichten des optischen Mehrschichtsystems können ebenfalls Sputterschichten, insbesondere durch Reaktivsputtem erzeugte Schichten, CVD- oder PECVD-Schichten oder durch Verdampfen, insbesondere durch Elektronenbombardement oder aus thermischen Quellen, erzeugte Schichten sein, so daß das gesamte optische Mehrschichtsystem aus in Vakuumfolge, insbesondere in einem kontinuierlichen Verfahren, aufgetragenen Schichten besteht.

Allgemein teilt sich bei einem Objekt, auf das eine Strahlung auftrifft, diese Strahlung in einen reflektierten, einen absorbierten und einen transmittierten Anteil auf, die durch den Reflexionsgrad (Reflexionsvermögen), den Absorptionsgrad (Absorptionsvermögen) und den Transmissionsgrad (Transmissionsvermögen) des Objektes bestimmt werden. Reflexionsvermögen, Absorptionsvermögen und Transmissionsvermögen sind optische Eigenschaften, die je nach der Wellenlänge einer einfallenden Strahlung (z.B. im Ultraviolett-Bereich, im Bereich des sichtbaren Lichts, im Infrarot-Bereich und im Bereich der Wärmestrahlung) für ein- und dasselbe Material unterschiedliche Werte annehmen können. Hinsichtlich des Absorptionsvermögens ist dabei das Kirchhoffsche Gesetz bekannt, wonach der Absorptionsgrad jeweils bei einer bestimmten Temperatur und Wellenlänge in konstantem Verhältnis zum Emissionsgrad steht. Somit sind für das Absorptionsvermögen auch das Wiensche Verschiebegesetz bzw. das Plancksche Gesetz sowie das Stefan-Boltzmann-Gesetz von Bedeutung, durch die bestimmte Zusammenhänge zwischen Strahlungsintensität, spektraler Verteilungdichte, Wellenlänge und Temperatur eines sogenannten "Schwarzen Körpers" beschrieben werden. Dabei ist bei Berechnungen zu beachten, daß der "Schwarze Körper" als solcher nicht existiert und reale Stoffe in je charakteristischer Weise von der Idealverteilung abweichen. Das erfindungsgemäß vorhandene optische Mehrschichtsystem gestattet es nun insbesondere, in verschiedenen Wellenlängenbereichen Absorptionsgrad und Reflexionsgrad gezielt selektiv einzustellen.

Erfindungsgemäß kann so ein nach DIN 5036, Teil 3 bestimmter Licht-Gesamtreflexionsgrad auf der Seite des optischen Mehrschichtsystems auf einen bevorzugten Wert von weniger als 5 % eingestellt werden, wobei neben einer hohen Atterungsbeständigkeit auch eine hohe thermische Stabilität gewährleistet werden kann - derart, daß bei einer Temperaturbelastung von 430 °C / 100 Stunden nur Änderungen von weniger als 7 %, vorzugsweise von weniger als 4 %, des vorhandenen Reflexionsgrades auftreten. Außerdem tritt bei einer solchen Temperaturbelastung vorteilhafterweise auch kein schädliches Ausgasen auf.

Neben einer hohen thermischen und chemischen Langzeitbeständigkeit zeichnet sich das erfindungsgemäß vorhandene Verbundmaterial auch durch eine gute Verarbeitbarkeit, insbesondere Verformbarkeit, sowie eine aufgrund des metallischen Trägers - bei dem es sich bevorzugt um Aluminium oder um Stahl handeln kann - hohe Wärmeleitfähigkeit aus. Letzteres ist insofern von besonderer Bedeutung, als dadurch die durch die Lichtabsorption auf der lichtabsorbierend wirkenden Seite und die durch die Wärmestrahlung der Lichtquelle von der Wandung aufgenommene Wärme schnell abgeleitet werden kann.

Die genannten Verfahren zur Aufbringung des Schichtsystems gestatten es vorteilhafterweise auch, die chemische Zusammensetzung MeO_{z}, MeFᵣ, MeNₛ der obersten Schicht und die chemischen Zusammensetzung CrOₓ der chromoxidischen Schicht hinsichtlich der Indizes x, y, z, r und s nicht nur auf bestimmte, diskrete Werte einzustellen, sondern zwischen dem oxydierten Stoff und dem Sauerstoff ein stöchiometrisches oder nichtstöchiometrisches Verhältnis innerhalb bestimmter Grenzen fließend zu variieren. Dadurch können beispielsweise der Brechungsindex der reflexionsmindernden obersten Schicht, die auch ein Ansteigen der Werte für die mechanische Belastbarkeit (DIN 58196, Teil 5) bewirkt, und der Absorptionsgrad der chromoxidischen Schicht gezielt eingestellt werden, wobei mit zunehmendem Wert des Index x die Absorptionsfähigkeit abnimmt.

Das erfindungsgemäß die Wandung bildende Verbundmaterial weist durch seine synergistisch wirkende Eigenschaftskombination
- der Trägerschicht, z.B. deren ausgezeichneter Verformbarkeit, mit der sie Beanspruchungen im Herstellungsprozeß des erfindungsgemäßen Abdeckteils bei den vorzunehmenden Formgebungsprozessen ohne Probleme widersteht, z.B. deren hoher Wärmeleitfähigkeit sowie der Fähigkeit zu einer im Licht-Wellenlängenbereich zusätzlich absorptionsfördemden Oberflächengestaltung, der die anderen Schichten dann im Relief folgen, und außerdem mit einem Reflexionsvermögen im Bereich der Wärmestrahlung, das die Wirkung der metallischen Schicht des optischen Dreischichtsystems verstärkt;
- der metallischen Schicht, die durch ihre Konstituenten, die im Bereich der Wärmestrahlung ein hohes Reflexionsvermögen und damit eine geringe Emission aufweisen, der Tatsache Rechnung trägt, daß nach dem Gesetz von Lambert-Bouguer die Strahlungsleistung mit wachsender Eindringtiefe mit exponentieller Charakteristik absorbiert wird, und für die meisten anorganischen Stoffe schon in einer sehr geringen Tiefe (weniger als etwa 1 µm) als zur Abführung durch den Träger weiterleitbare Wärmeenergie zur Verfügung steht;
- der chromoxidischen Schicht mit ihrer hohen Selektivität des Absorptionsgrades (Spitzenwerte über 90 % im Wellenlängenbereich von etwa 300 bis 2500 nm, Minimalwerte unter 15 % im Wellenlängenbereich > ca. 2500 nm) und ihrer bereits erläuterten Modifikationsfähigkeit (Index x) und
- der obersten, insbesondere siliciumoxidischen, Schicht, auf deren Vorteile schon vorstehend teilweise verwiesen wurde, und die neben ihrer entriegelnden Wirkung auch ein hohes Transmissionsvermögen aufweist und dadurch den Anteil der chromoxidischen Schicht absorbierbaren Strahlungswerte im solaren Bereich erhöht;
eine ausgezeichnete Eignung für die Beschichtung des Materials zur Herstellung des erfindungsgemäßen Abdeckteils auf.

Unter dem optischen Mehrschichtsystem kann des weiteren auf dem Träger eine Zwischenschicht vorgesehen sein, die einerseits einen mechanischen und korrosionshemmenden Schutz für den Träger und andererseits eine hohe Haftung für das optische Mehrschichtsystem gewährleistet.

Auf der dem optischen Mehrschichtsystem abgewandten Seite kann/können auf den Träger zu dem gleichen Zweck eine Unterschicht und/oder, insbesondere mit dem Ziel einer Refexionserhöhung, eine Dekorativschicht, wie eine Spiegelschicht, aufgebracht sein.

Weitere vorteilhafte Ausführungen der Erfindung sind in den Unteransprüchen und in der nachfolgenden detaillierten Beschreibung enthalten.

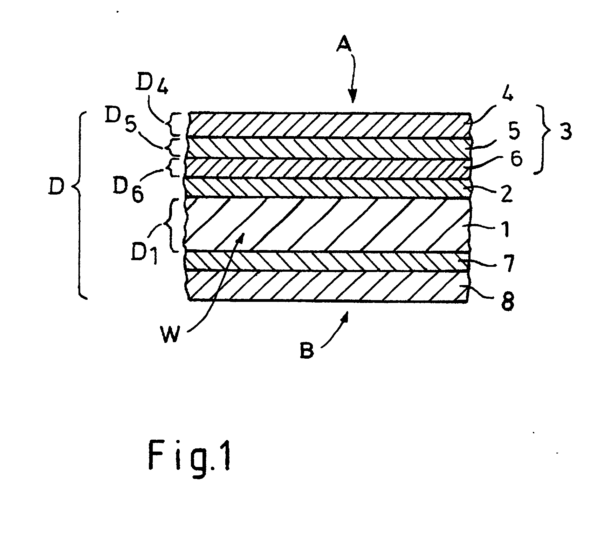

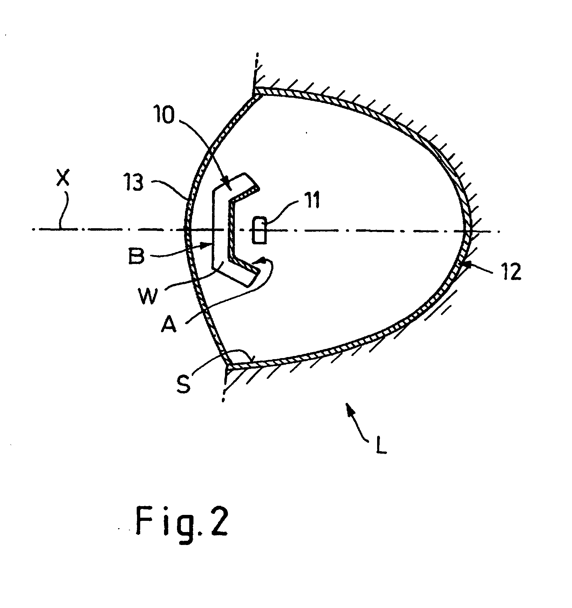

Anhand eines durch die beiliegende Zeichnung veranschaulichten Ausführungsbeispiels wird die Erfindung näher erläutert. Fig. 1 zeigt dabei eine prinzipielle Schnittdarstellung durch eine Wandung eines erfindungsgemäßen Abdeckteils, Fig. 2 zeigt in einer prinzipiellen Schnittdarstellung einen Kraftfahrzeugscheinwerfer mit einem erfindungsgemäßen Abdeckteil.

Die Wandung W des erfindungsgemäßen Abdeckteils (in Fig. 2 mit dem Bezugszeichen 10 bezeichnet) besteht in der beschriebenen Ausführung aus einem Verbundmaterial mit einer hohen Selektivität des Absorptions- und Reflexionsgrades im solaren Wellenlängenbereich und im Bereich der Wärmestrahlung.

Das Verbundmaterial besteht, wie Fig. 1 zeigt, aus einem, insbesondere verformungsfähigen, bandförmigen Träger 1 aus Aluminium, einer auf einer Seite A auf den Träger 1 aufgetragenen Zwischenschicht 2 und einem auf die Zwischenschicht 2 aufgebrachten optisch wirksamen Mehrschichtsystem 3.

Ein nach DIN 5036, Teil 3 bestimmter LichtLicht-Gesamtreflexionsgrad beträgt auf der Seite A des optischen Mehrschichtsystems 3 weniger als 5 %.

Das Verbundmaterial kann bevorzugt als Coil mit einer Breite bis zu 1600 mm, vorzugsweise von 1250 mm, und mit einer Dicke D von etwa 0,1 bis 1,5 mm, vorzugsweise von etwa 0,2 bis 0,8 mm, zur Verarbeitung kommen, wobei das erfindungsgemäße Abdeckteil 10 daraus in einfacher Weise als Stanz-Präge-Biege-Teil herstellbar ist. Der Träger 1 kann dabei vorzugsweise eine Dicke D₁ von etwa 0,1 bis 0,7 mm besitzen.

Das Aluminium des Trägers 1 kann insbesondere eine höhere Reinheit als 99,0 % aufweisen, wodurch eine hohe Wärmeleitfähigkeit gefördert wird.

Die Zwischenschicht 2 besteht aus anodisch oxidiertem oder elektrolytisch geglänztem und anodisch oxidiertem Aluminium, das aus dem Trägermaterial gebildet ist.

Das Mehrschichtsystem 3 besteht aus drei Einzelschichten 4, 5, 6, wobei die beiden oberen Schichten 4, 5 oxidische Schichten sind und die unterste Schicht 6 eine auf die Zwischenschicht 2 aufgetragene metallische Schicht ist. Die oberste Schicht 4 des optischen Mehrschichtsystems 3 ist insbesondere eine siliciumoxidische Schicht der chemischen Zusammensetzung SiO_{y}. Die mittlere Schicht 5 ist eine chromoxidische Schicht der chemischen Zusammensetzung CrOₓ, und die unterste Schicht 6 besteht aus Gold, Silber, Kupfer, Chrom, Aluminium, Nickel und/oder Molybdän.

Die Indizes x, y bezeichnen dabei ein stöchiometrisches oder nichtstöchiometrisches Verhältnis des oxidierten Stoffes zum Sauerstoff in den Oxiden. Das stöchiometrische oder nichtstöchiometrische Verhältnis x kann vorzugsweise im Bereich 0 < x < 3 liegen, während das stöchiometrische oder nichtstöchiometrische Verhältnis y Werte im Bereich 1 ≤ y ≤ 2 annehmen kann.

Dadurch, daß die beiden oberen Schichten 4, 5 des optischen Mehrschichtsystems 3 Sputterschichten sein können, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten, ist es möglich, die Verhältnisse x, y ungestuft (also auch auf nichtstöchiometrische Werte der Indizes) einzustellen, wodurch die jeweiligen Schichteigenschaften variiert werden können.

Die oberste Schicht 4 des optischen Mehrschichtsystems 3 kann dabei mit Vorteil eine Dicke D₄ von mehr als 3 nm aufweisen. Bei dieser Dicke D₄ besitzt die Schicht bereits eine ausreichende Effizienz, wobei Zeit-, Material- und Energieaufwand jedoch nur geringe Werte annehmen. Ein oberer Grenzwert der Schichtdicke D₄ liegt unter diesem Gesichtspunkt bei etwa 500 nm. Ein für die mittlere Schicht 5 des optischen Mehrschichtsystems 3 unter den genannten Gesichtspunkten optimaler Wert ist eine minimale Dicke D₅ von mehr als 10 nm, maximal etwa 1 µm. Der entsprechende Wert für die unterste Schicht 6 liegt bei einer Dicke D₆ von mindestens 3 nm, maximal etwa 500 nm.

Die unterste Schicht 6 des optischen Mehrschichtsystems 3 sollte im Sinne einer hohen Effizienz bevorzugt eine höhere Reinheit als 99,5 % aufweisen. Die Schicht kann, wie bereits erwähnt, eine Sputterschicht oder eine durch Verdampfen, insbesondere durch Elektronenbombardement oder aus thermischen Quellen, erzeugte Schicht sein, so daß das gesamte optische Mehrschichtsystem 3 vorteilhafterweise aus in Vakuumfolge in einem kontinuierlichen Verfahren aufgetragenen Schichten 4, 5, 6 besteht.

Auf der dem optischen Mehrschichtsystem 3 abgewandten Seite B des bandförmigen Trägers 1 ist eine Unterschicht 7 aufgebracht, die - wie die Zwischenschicht 2 - aus anodisch oxidiertem oder elektrolytisch geglänztem und anodisch oxidiertem Aluminium besteht. Die Zwischenschicht 2 und die Unterschicht 7 können vorteilhafterweise gleichzeitig auf dem naßchemischen Weg erzeugt werden, wobei die Poren der Aluminiumoxidschicht in der letzten Phase der naßchemischen Prozeßkette weitestgehend durch eine Heißverdichtung verschlossen werden können, so daß eine dauerhaft beständige Oberfläche entsteht. Die Unterschicht 7 bietet somit - wie die Zwischenschicht 2 - einen mechanischen und korrosionshemmenden Schutz für den Träger 1.

Ein nach DIN 5036, Teil 3 bestimmter LichtLicht-Gesamtreflexionsgrad auf der dem optischen Mehrschichtsystem 3 abgewandten Seite B kann dabei bevorzugt mindestens 84 % betragen.

Erfindungsgemäß ist es insbesondere möglich, den Schichtaufbau derart zu gestalten, daß der nach DIN 5036, Teil 3 bestimmte Licht-Gesamtreflexionsgrad auf der Seite A des optischen Mehrschichtsystems 3 und/oder auf der dem optischen Mehrschichtsystem 3 abgewandten Seite B bei einer Temperaturbelastung von 430 °C / 100 Stunden Änderungen von weniger als 7 %, vorzugsweise von weniger als 4 % aufweist.

Fig. 2 veranschaulicht als typischen Anwendungsfall den Einsatz des erfindungsgemäßen Abdeckteils 10 in einem Kraftfahrzeugscheinwerfer L. Von dem Scheinwerfer L sind in der Zeichnung schematisiert neben dem Abdeckteil 10 eine Lichtquelle 11, ein Reflektorhohlkörper 12 und eine den Reflektorhohlkörper 12 frontseitig verschließende durchsichtige Scheibe 13 dargestellt. Die Lichtquelle 11 ist in einer optischen Achse X des Reflektorhohlkörpers 12 angeordnet und wird als lichtemittierende Fläche beispielsweise durch eine Wolfram-Lampenwendel einer Halogenlampe gebildet. Der Reflektorhohlkörper 12 ist in Bezug auf die Lichtquelle konkav gekrümmt und mit einer lichtreflektierenden (spiegelnden) Oberfläche S versehen, so daß durch das von der Lichtquelle 11 ausgehende und vom Reflektor 12 an der Oberfläche S zurückgeworfene Licht ein Lichtbündel entsteht, das durch die Scheibe 13 aus dem Scheinwerfer L austritt. Das erfindungsgemäße Abdeckteil 10 verhindert in dem Scheinwerfer L das Auftreten von unerwünschter, sogenannter vagabundierender, Reflexion. Seine in Bezug auf die Lichtquelle 11 konkav gekrümmte Wandung W umfaßt die Lichtquelle 11 schirmartig und ist dabei mit seiner ersten, lichtabsorbierend wirkenden Seite A der Lichtquelle 11 zugewandt. Die andere konvex gekrümmte, vorzugsweise reflektierend wirkende, Seite B weist in Richtung der Scheibe 13. Die Wandung W des erfindungsgemäßen Abdeckteils 10 besteht aus dem Verbundmaterial mit dem metallischen Träger 1 und dem aus drei Schichten 4, 5, 6 aufgebauten Mehrschichtsystem 3 , wie dies vorstehend erläutert wurde. Durch das erfindungsgemäße, in umweltfreundlicher und kostengünstiger Weise herstellbare Abdeckteil 10 wird eine hohe Lichtabsorption und Wärmeableitung erreicht, wobei unter den thermisch stark beanspruchenden Betriebsbedingungen in dem geschlossenen Reflektorhohlkörper 12 eine vergleichsweise lange Lebensdauer sowohl des Abdeckteils 10 als auch der Lichtquelle 11 gewährleistet werden kann.

Die vorliegende Erfindung ist nicht auf das dargestellte Ausführungsbeispiel beschränkt, sondern umfaßt alle im Sinne der Erfindung gleichwirkenden Mittel und Maßnahmen. So ist es beispielsweise auch möglich, daß die unterste Schicht 6 des optischen Mehrschichtsystems 3 aus mehreren übereinander angeordneten Teilschichten aus Gold, Silber, Kupfer, Chrom, Aluminium und/oder Molybdän besteht. Wie bereits erwähnt, kann die oberste Schicht alternativ auch aus Fluoriden oder Nitriden bestehen. Als Trägermaterial besitzt auch Stahl, insbesondere legierter und/oder oberflächenveredelter Stahl, eine ausgezeichnete Eignung.

Des weiteren kann der Fachmann die Erfindung durch zusätzliche vorteilhafte Maßnahmen ergänzen, ohne daß der Rahmen der Erfindung verlassen wird. So kann - wie ebenfalls zeichnerisch in Fig. 1 dargestellt - auf der dem optischen Mehrschichtsystem 3 abgewandten Seite B, insbesondere auf der Unterschicht 7, zusätzlich eine Dekorativschicht 8 aufgebracht sein. Diese Dekorativschicht 8 kann beispielsweise eine metallische oder aus Titannitrid oder anderen geeigneten Materialien, mit denen auch neben einem Glanz eine bestimmte Färbung verliehen werden kann, bestehende Spiegelschicht sein.

Der Einsatzbereich des erfindungsgemäßen Abdeckteils 10 beschränkt sich nicht auf Kraftfahrzeugscheinwerfer, sondern umfaßt auch alle anderen Beleuchtungseinrichtungen, soweit bei diesen für eine hocheffiziente Lichtabschirmung Bedarf besteht.

### Bezugszeichen

- 1: Träger
- 2: Zwischenschicht
- 3: optisches Mehrschichtsystem
- 4: obere Schicht von 3
- 5: mittlere Schicht von 3
- 6: untere Schicht von 3
- 7: Unterschicht
- 8: Dekorativschicht
- 10: Abdeckteil
- 11: Lichtquelle
- 12: Reflektorhohlkörper
- 13: Scheibe

- A: Oberseite von W (Seite von 3)
- B: Unterseite von W (3 abgewandt)
- D: (Gesamt-)Dicke
- D₁: Dicke von 1
- D₄: Dicke von 4
- D₅: Dicke von 5
- D₆: Dicke von 6
- L: Scheinwerfer
- S: Spiegelschicht auf 12
- W: Wandung von 10
- X: optische Achse von 12

## Patentansprüche

1. Abdeckteil für eine Lichtquelle (11), insbesondere für eine in einem Kraftfahrzeugscheinwerfer (L) angeordnete Scheinwerferlampe, mit einer Wandung (W), die eine erste, der Lichtquelle (11) zugekehrte, lichtabsorbierend wirkende Seite (A) und eine zweite, vorzugsweise reflektierend wirkende, Seite (B) aufweist,
**dadurch gekennzeichnet, daß** die Wandung (W) aus einem Verbundmaterial mit einem metallischen Träger (1) besteht, auf den auf der ersten Seite (A) ein optisch wirksames, aus drei Schichten (4, 5, 6) aufgebautes Mehrschichtsystem (3) aufgebracht ist, dessen oberste Schicht (4) eine dielektrische Schicht, vorzugsweise eine oxidische, fluoridische oder nitridische Schicht der chemischen Zusammensetzung MeO_{z}, MeFᵣ, MeNₛ, mit einem Brechungsindex n< 1, 8 und dessen mittlere Schicht (5) eine lichtabsorbierende chromoxidische Schicht der chemischen Zusammensetzung CrOₓ ist und dessen unterste Schicht aus Gold, Silber, Kupfer, Chrom, Aluminium, Nickel und/oder Molybdän besteht, wobei die Indizes x, z, r und s ein stöchiometrisches oder nichtstöchiometrisches Verhältnis in den Oxiden, Fluoriden oder Nitriden bezeichnen.

2. Abdeckteil nach Anspruch 1,
**dadurch gekennzeichnet, daß** die oberste Schicht (4) des optischen Mehrschichtsystems (3) eine siliciumoxidische Schicht der chemischen Zusammensetzung SiO_{y} ist, wobei der Index y ein stöchiometrisches oder nichtstöchiometrisches Verhältnis bezeichnet.

3. Abdeckteil nach Anspruch 1 oder 2,
**gekennzeichnet durch** eine unter dem optischen Mehrschichtsystem (3) auf den Träger (1) aufgebrachte Zwischenschicht (2).

4. Abdeckteil nach einem der Ansprüche 1 bis 3,
**gekennzeichnet durch** eine auf der dem optischen Mehrschichtsystem (3) abgewandten Seite (B) auf den Träger (1) aufgebrachte Unterschicht (7).

5. Abdeckteil nach einem der Ansprüche 1 bis 4,
**dadurch gekennzeichnet, daß** der Träger (1) aus Aluminium besteht.

6. Abdeckteil nach Anspruch 5,
**dadurch gekennzeichnet, daß** das Aluminium des Trägers (1) eine höhere Reinheit als 99,0 % aufweist.

7. Abdeckteil nach einem der Ansprüche 3 bis 6,
**dadurch gekennzeichnet, daß** die Zwischenschicht (2) aus anodisch oxidiertem oder elektrolytisch geglänztem und anodisch oxidiertem Aluminium besteht.

8. Abdeckteil nach einem der Ansprüche 4 bis 7,
**dadurch gekennzeichnet, daß** die Unterschicht (7) aus anodisch oxidiertem oder elektrolytisch geglänztem und anodisch oxidiertem Aluminium besteht.

9. Abdeckteil nach einem der Ansprüche 1 bis 4,
**dadurch gekennzeichnet, daß** der Träger (1) aus Stahl, insbesondere legiertem und/oder oberflächenveredeltem Stahl, besteht.

10. Abdeckteil nach einem der Ansprüche 1 bis 9,
**dadurch gekennzeichnet, daß** das stöchiometrische oder nichtstöchiometrische Verhältnis x im Bereich 0 < x < 3 liegt.

11. Abdeckteil nach einem der Ansprüche 2 bis 10,
**dadurch gekennzeichnet, daß** das stöchiometrische oder nichtstöchiometrische Verhältnis y im Bereich 1 ≤ y ≤ 2 liegt.

12. Abdeckteil nach einem der Ansprüche 1 bis 11,
**dadurch gekennzeichnet, daß** die unterste Schicht (6) des optischen Mehrschichtsystems (3) aus mehreren übereinander angeordneten Teilschichten aus Gold, Silber, Kupfer, Chrom, Aluminium, Nickel und/oder Molybdän besteht.

13. Abdeckteil nach einem der Ansprüche 1 bis 12,
**dadurch gekennzeichnet, daß** die beiden oberen Schichten (4, 5) des optischen Mehrschichtsystems (3) Sputterschichten, insbesondere durch Reaktivsputtem erzeugte Schichten, CVD- oder PECVD-Schichten oder durch Verdampfen, insbesondere durch Elektronenbombardement oder aus thermischen Quellen, erzeugte Schichten sind.

14. Abdeckteil nach einem der Ansprüche 1 bis 13,
**dadurch gekennzeichnet, daß** die metallische Schicht des optischen Mehrschichtsystems (3) eine Sputterschicht oder eine durch Verdampfen, insbesondere durch Elektronenbombardement oder aus thermischen Quellen, erzeugte Schicht ist.

15. Abdeckteil nach einem der Ansprüche 1 bis 14,
**dadurch gekennzeichnet, daß** das optische Mehrschichtsystem (3) aus in Vakuumfolge in einem kontinuierlichen Verfahren aufgetragenen Schichten besteht.

16. Abdeckteil nach einem der Ansprüche 1 bis 15,
**dadurch gekennzeichnet, daß** die oberste Schicht (4) des optischen Mehrschichtsystems (3) eine Dicke (D₄) von mehr als 3 nm und maximal etwa 500 nm aufweist.

17. Abdeckteil nach einem der Ansprüche 1 bis 16,
**dadurch gekennzeichnet, daß** die mittlere Schicht (5) des optischen Mehrschichtsystems (3) eine Dicke (D₅) von mehr als 10 nm und maximal etwa 1µm aufweist.

18. Abdeckteil nach einem der Ansprüche 1 bis 17,
**dadurch gekennzeichnet, daß** die unterste Schicht (6) des optischen Mehrschichtsystems (3) eine Dicke (D₆) von mindestens 3 nm und maximal etwa 500 nm aufweist.

19. Abdeckteil nach einem der Ansprüche 1 bis 18,
**dadurch gekennzeichnet, daß** ein nach DIN 5036, Teil 3 bestimmter Licht-Gesamtreflexionsgrad auf der Seite (A) des optischen Mehrschichtsystems (3) weniger als 5 % beträgt.

20. Abdeckteil nach einem der Ansprüche 1 bis 19,
**dadurch gekennzeichnet, daß** ein nach DIN 5036. Teil 3 bestimmter LichtLicht-Gesamtreflexionsgrad auf der dem optischen Mehrschichtsystem (3) abgewandten Seite (B) mindestens 84 % beträgt.

21. Abdeckteil nach einem der Ansprüche 1 bis 20,
**dadurch gekennzeichnet, daß** ein nach DIN 5036, Teil 3 bestimmter LichtLicht-Gesamtreflexionsgrad auf der Seite (A) des optischen Mehrschichtsystems (3) und/oder auf der dem optischen Mehrschichtsystem (3) abgewandten Seite (B) bei einer Temperaturbelastung von 430 °C / 100 Stunden Änderungen von weniger als 7 %, vorzugsweise von weniger als 4 %, aufweist.

22. Abdeckteil nach einem der Ansprüche 1 bis 21,
**dadurch gekennzeichnet, daß** die unterste Schicht (6) des optischen Mehrschichtsystems (3) eine höhere Reinheit als 99,5 % aufweist.

23. Abdeckteil nach einem der Ansprüche 1 bis 22,
**gekennzeichnet durch** eine Ausbildung als Stanz-Präge-Biege-Teil mit einer Dicke (D) von etwa 0,1 bis 1,5 mm, vorzugsweise von etwa 0,2 bis 0,8 mm.

24. Abdeckteil nach einem der Ansprüche 1 bis 23,
**gekennzeichnet durch** eine auf der dem optischen Mehrschichtsystem (3) abgewandten Seite (B), insbesondere auf der Unterschicht (7) aufgebrachte Dekorativschicht (8), beispielsweise eine Spiegelschicht.

## Claims

1. Cover part for a light source (11), in particular for a headlight lamp arranged in a motor vehicle headlight (L), having a wall (W), which has a first side (A), which faces the light source (11) and has a light-absorbing action, and a second side (B) , which preferably has a reflective action, **characterized in that** the wall (W) consists of a composite material having a metallic substrate (1), to which, on the first side (A) , an optically active multilayer system (3) composed of three layers (4, 5, 6) is applied, the top layer (4) of which multilayer system is a dielectric. layer, preferably an oxide, fluoride or nitride layer of chemical composition NeO_{z}, MeFᵣ. MeNₛ with a refractive index n < 1, 8, and the middle layer (5) of which multilayer system is. a light-absorbing chromium oxide layer of chemical composition CrOₓ, and the bottom layer of which multilayer system consists of gold, silver, copper, chromium, aluminium, nickel and/or molybdenum, the indices x, z, r and s indicating a stoichiometric or non-stoichiometric ratio in the oxides, fluorides or nitrides.

2. Cover part according to Claim 1, **characterized in that** the top layer (4) of the optical multilayer system (3) is a silicon oxide layer of chemical composition SiOy, the index y indicating a stoichiometric or non-stoichiometric ratio.

3. Cover part according to Claim 1 or 2, **characterized by** an intermediate layer (2) which is applied to the substrate (1) below the optical multilayer system (3).

4. , Cover part according to one of Claims 1 to 3, **characterized by** a lower layer (7), which is applied to the substrate (1) on the side (B) which is remote from the optical multilayer, system (3 ) .

5. Cover part according to one of Claims 1 to 4, **characterized in that** the substrate (1) consists of aluminium.

6. Cover part according to Claim 5, **characterized in that** the aluminium of the substrate (1) is more than 99.0% pure.

7. Cover part according to one of Claims 3 to 6, **characterized in that** the intermediate layer (2) consists of anodically oxidized or electrolytically brightened and anodically oxidized aluminium.

8. Cover part according to one of Claims 4 to 7, **characterized in that** the lower layer (7) consists of anodically oxidized or electrolytically brightened and anodically oxidized aluminium.

9. Cover part according to one of Claims 1 to 4, **characterized in that** the substrate (1) consists of steel, in particular alloyed and/or surface-treated steel.

10. Cover part according to one of Claims 1 to 9, **characterized in that** the stoichiometric or non-stoichiometric ratio x lies in the range 0 < x < 3.

11. Cover part according to one of Claims 2 to 10, **characterized in that** the stoichiometric or non-stoichiometric ratio y lies in the range 1 ≤ y ≤ 2.

12. Cover part according to one of Claims 1 to 11, **characterized in that** the bottom layer (6) of the optical multilayer system (3) comprises a plurality of partial layers of gold, silver, copper, chromium, aluminium, nickel and/or molybdenum arranged above one another.

13. Cover part according to one of Claims 1 to 12, **characterized in that** the two upper layers (4, 5) of the optical multilayer system (3) are sputtered layers, in particular layers produced by reactive sputtering, CVD or PECVD layers or layers produced by vaporization, in particular by electron bombardment or from thermal sources.

14. Cover part according to one of Claims 1 to 13, **characterized in that** the metallic layer of the optical multilayer system (3) is a sputtered layer or a layer produced by vaporization, in particular by electron bombardment or from thermal sources.

15. Cover part according to one of Claims 1 to 14, **characterized in that** the optical multilayer system (3) comprises layers which are applied in vacuum order in a continuous process.

16. Cover part according to one of Claims 1 to 15, **characterized in** chat the top layer (4) of the optical multilayer system (3) has a thickness (D₄) of more than 3 nm and at most approximately 500 nm.

17. Cover part according to one of Claims 1 to 16, **characterized in that** the middle layer (5) of the optical multilayer system (3) has a thickness (D₅) of more than 10 nm and at most approximately 1 µm.

18. Cover part according to one of Claims 1 to 17, **characterized in that** the bottom layer (6) of the optical multilayer system (3) has a thickness (D₆) of at least 3 nm and at most approximately 500 nm.

19. Cover part according to one of Claims 1 to 18, **characterized in that** a total light reflectivity, determined in accordance with DIN 5036, part 3, on the side (A) of the optical multilayer system (3) is less than 5%.

20. Cover part according to one of Claims 1 to 19, **characterized in that** a total light reflectivity, determined in accordance with DIN 5036, part 3, on the side (B) which is remote from the optical multilayer system (3) is at least 84%.

21. Cover part according to one of Claims 1 to 20, **characterized in that** a total light reflectivity, determined in accordance with DIN 5036, part 3, on the side (A) of the optical multilayer system (3) and/or on the side (B) which is remote from the optical multilayer system (3), under a thermal load of 430°C/100 hours, undergoes changes of less than 7%, preferably of less than 4%.

22. Cover part according to one of Claims 1 to 21, **characterized in that** the bottom layer (6) of the optical multilayer system (3) is more than 99.5% pure.

23. Cover part according to one of Claims 1 to 22, **characterized by** a design as a stamped/embossed/bent part with a thickness (D) of approximately 0.1 to 1.5 mm, preferably of approximately 0.2 to 0.8 mm.

24. Cover part according to one of Claims 1 to 23, **characterized by** a decorative layer (8), for example a mirror coating, applied to the side (B) which is remote from the optical multilayer system (3), in particular to the lower layer (7).

## Revendications

1. Elément d'écran pour une source lumineuse (11) en particulier pour une lampe de projecteur disposée dans un projecteur (L) de véhicule automobile, comprenant une paroi (W) qui présente un première face (A), dirigée vers la source lumineuse (11) et qui a un effet d'absorption de la lumière et une deuxième face (B) qui a de préférence un effet de réflexion, **caractérisé en ce que** la paroi (W) est composée d'une matière composite comprenant un support métallique (1) sur lequel est disposé, sur la première face (A), un système multicouche (3) à action optique composé de trois couches (4, 5, 6) dont la couche extrême supérieure (4) est de préférence une couche diélectrique, de préférence une couche d'oxyde, de fluorure ou de nitrure possédant la composition chimique Me0_{z}, MeFᵣ, MeNₛ, ayant un indice de réfraction n< 1,8, et dont la couche centrale (5) est une couche d'oxyde de chrome absorbant la lumière, de composition chimique CrOₓ et dont la couche extrême inférieure est composée d'or, d'argent, de cuivre, de chrome, d'aluminium, de nickel et/ou de molybdène, les indices x, z, r et s désignant un rapport stoechiométrique ou non stoechiométrique dans les oxydes, fluorures ou nitrures.

2. Elément d'écran selon la revendication 1,
**caractérisé en ce que** la couche extrême supérieure (4) du système optique multicouche (3) est une couche d'oxyde de silicium ayant pour composition Si0_{y,} l'indice y désignant un rapport stoechiométrique ou non stoechiométrique.

3. Elément d'écran selon la revendication 1 ou 2,
**caractérisé par** une couche intermédiaire (2) déposée sur le support (1) au-dessous le système optique multicouche (3).

4. Elément d'écran selon une des revendications 1 à 3,
**caractérisé par** une couche inférieure (7) déposée sur le support (1) sur la face (B) qui est à l'opposé du système optique multicouche (3).

5. Elément d'écran selon une des revendications 1 à 4,
**caractérisé en ce que** le support (1) est en aluminium.

6. Élément d'écran selon la revendication 5,
**caractérisé en ce que** l'aluminium du support (1) possède une pureté supérieure à 99,0 %.

7. Élément d'écran selon une des revendications 3 à 6,
**caractérisé en ce que** la couche intermédiaire (2) est composée d'aluminium oxydé par anodisation ou brillanté électrolytiquement et oxydé par anodisation.

8. Elément d'écran selon une des revendications 4 à 7,
**caractérisé en ce que** la couche inférieure (7) est composée d'aluminium oxydé par anodisation ou brillanté électrolytiquement et oxydé par anodisation.

9. Élément d'écran selon une des revendications 1 à 4,
**caractérisé en ce que** le support (1) est composé d'acier, en particulier d'acier allié et/ou d'acier traité en surface.

10. Élément d'écran selon une des revendications 1 à 9,
**caractérisé en ce que** le rapport stoechiométrique ou non stoechiométrique x est dans l'intervalle de 0 <x<3.

11. Elément d'écran selon une des revendications 2 à 10,
**caractérisé en ce que** le rapport stoechiométrique ou non stoechiométrique y se trouve dans l'intervalle de 1 ≤ y ≤ 2.

12. Elément d'écran selon une des revendications 1 à 11,
**caractérisé en ce que** la couche extrême inférieure (6) du système optique multicouche (3) composé de plusieurs couches partielles disposées les unes au-dessus des autres, est composée d'or, d'argent, de cuivre, de chrome, d'aluminium, de nickel et/ou de molybdène.

13. Elément d'écran selon une des revendications 1 à 12,
**caractérisé en ce que** les deux couches supérieures (4, 5) du système optique multicouche (3) sont des couches produites par pulvérisation cathodique, en particulier par pulvérisation réactive, des couches CVD ou PECVD ou des couches produites par évaporation, en particulier par bombardement d'électrons ou à partir de sources thermiques.

14. Elément d'écran selon une des revendications 1 à 13,
**caractérisé en ce que** la couche métallique du système optique multicouche (3) est une couche de pulvérisation cathodique ou une couche produite par évaporation, en particulier par bombardement électronique ou à partir de sources thermiques.

15. Élément d'écran selon une des revendications 1 à 14,
**caractérisé en ce que** le système optique multicouche (3) est composé de couches déposées dans une suite de vides dans un procédé continu.

16. Elément d'écran selon une des revendications 1 à 15,
**caractérisé en ce que** la couche extrême supérieure (4) du système optique multicouche (3) présente une épaisseur (D₄) de plus de 3 nm et au maximum d'environ 500 nm.

17. Elément d'écran selon une des revendications 1 à 16,
**caractérisé en ce que** la couche centrale (5) du système optique multicouche (3) présente une épaisseur (D₅) de plus de 10 nm et au maximum d'environ 1µm.

18. Elément d'écran selon une des revendications 1 à 17,
**caractérisé en ce que** la couche extrême inférieure (6) du système optique multicouche (3) présente une épaisseur (D₆) d'au moins 3 nm et au maximum d'environ 500 nm.

19. Elément d'écran selon une des revendications 1 à 18,
**caractérisé en ce qu'**un degré total de réflexion de la lumière, déterminé selon DIN 5036, partie 3, est inférieur à 5 % sur la face (A) du système optique multicouche (3).

20. Elément d'écran selon une des revendications 1 à 19,
**caractérisé en ce qu'**un degré total de réflexion de la lumière, déterminé selon DIN 5036, partie 3, est d'au moins 84 % sur la couche (B) qui est à l'opposé du système optique multicouche (3).

21. Elément d'écran selon une des revendications 1 à 20,
**caractérisé en ce qu'**un degré total de réflexion de la lumière, déterminé selon DIN 5036, partie 3, sur la face (A) du système optique multicouche (3) et/ou sur la face (B) qui est à l'opposé du système optique multicouche (3) présente des altérations de moins de 7 %, de préférence de moins de 4 %, sous une contrainte de température de 430 °C/100 heures.

22. Elément d'écran selon une des revendications 1 à 21,
**caractérisé en ce que** la couche extrême inférieure (6) du système optique multicouche (3) possède une pureté supérieure à 99,5 %.

23. Elément d'écran selon une des revendications 1 à 22,
**caractérisé en ce qu'**il est constitué d'une pièce découpée, cambrée, pliée, ayant une épaisseur (D) d'environ 0,1 à 1,5 mm, de préférence d'environ 0,2 à 0,8 mm.

24. Élément d'écran selon une des revendications 1 à 23,
**caractérisé par** une face (B) qui est à l'opposé du système optique multicouche (3), en particulier une couche décorative (8), par exemple une couche réfléchissante, déposée sur la couche inférieure (7).
